# EUROPÄISCHE PATENTSCHRIFT

(11) **EP 0 875 473 B1**
(45) Veröffentlichungstag und Bekanntmachung des Hinweises auf die Patenterteilung: **07.11.2001**
(21) Anmeldenummer: 98107097.2
(22) Anmeldetag: 18.04.1998
(51) Int. Cl.: B65G 57/06

(54) **Einrichtung zum Abstapeln von aus Einzelplatten oder Plattenpaketen bestehendem Plattenmaterial**
Apparatus for the stacking of single panels or packets of panels
Dispositif pour l'empilage de plaques ou des paquets de plaques

(30) Priorität: 30.04.1997 DE 19718291
(43) Veröffentlichungstag der Anmeldung: 04.11.1998
(73) Patentinhaber: HOLZMA Plattenaufteiltechnik GmbH, 75365 Calw-Holzbronn (DE)
(72) Erfinder: Jenkner, Erwin, 71083 Herrenberg-Oberjesingen (DE); Kempf, Martin, 72202 Nagold (DE); Heller, Heribert, 72218 Wildberg (DE)
(74) Vertreter: Dreiss, Fuhlendorf, Steimle & Becker

(56) Entgegenhaltungen:
- AT-B- 395 311
- DE-A- 3 136 950
- FR-A- 2 530 228
- US-A- 3 860 128

## Beschreibung

Die Erfindung betrifft eine Einrichtung zum Abstapeln von aus Einzelplatten oder Plattenpaketen bestehendem Plattenmaterial, mit den Merkmalen des Oberbegriffs von Anspruch 1.

Eine Abstapeleinrichtung dieser Art ist bekannt (US-A-3,860,128).

Für den horizontalen Transport des den Abstapelrechen tragenden Transportwagens zwischen einer Übernahmeposition und einer sich oberhalb einer Stapelvorrichtung befindenden Abstapelposition dient eine Steuervorrichtung. Mit ihrer Hilfe lässt sich der Horizontalbewegung des Transportwagens zugleich eine Auf- und Abwärtsbewegung des Abstapelrechens überlagern, um aufgenommenes Plattenmaterial über den Abstreifanschlag hinweg oberhalb der Stapelvorrichtung zu positionieren und anschließend hinter dem Abstreifanschlag abzusenken. Durch Rücksteuerung des Transportwagens wird dann das Plattenmaterial am Abstreifanschlag zum Abstreifen vom Abstapelrechen angelegt.

Zu diesem Zweck sind sowohl der Transportwagen mit einem den Abstapelrechen tragenden, vertikal beweglichen Tragkörper als auch die Steuervorrichtung mit einem über einen Steuerhebel mit dem Transportwagen zusammenwirkenden Kurbeltrieb ausgestattet, wobei der Steuerhebel zur Hubsteuerung des wagenseitigen Tragkörpers zugleich eine entsprechend ausgelegte Steuerkurve sowie einen am Transportwagen angelenkten Mitnehmer bildet.

Bei dieser Konstruktion führt der Abstapelrechen lediglich horizontale Transport- und Abstreifbewegungen aus. Um dabei aber abzustreifendes Plattenmaterial mit der Stapelvorrichtung bzw. mit auf dieser bereits zuvor abgestapeltem Plattenmaterial möglichst schonend in Berührung zu bringen, sind die Zinken des Abstapelrechens sich ihrem freien Ende zu spitzkeilförmig verjüngend ausgebildet. Das Plattenmaterial nimmt deshalb auf dem Abstapelrechen eine Schräglage ein, die sicherstellt, dass es beim Abstreifen vom Abstapelrechen nicht abkippen kann.

Diese Schräglage bedingt, dass Plattenmaterial auf dem Abstapelrechen lediglich einlagig, d.h. nebeneinander liegend, sicher transportierbar ist, da bei paketweise übereinander geschichtetem Plattenmaterial, insbesondere, wenn dasselbe glatte Oberflächen aufweisen sollte, die Gefahr besteht, dass bei den üblicherweise kurzen Arbeitstakten für den Transport sich ein Teil desselben auf dem Abstapelrechen verlagern oder von diesem herunterrutschen kann.

Der Erfindung liegt deshalb die Aufgabe zugrunde, eine Einrichtung mit den Merkmalen des Oberbegriffes von Anspruch 1 anzugeben, mit deren Hilfe auch gestapeltes Plattenmaterial auf dem Abstapelrechen verlagerungssicher über die Stapelvorrichtung transportierbar und schonend von diesem abstreifbar ist.

Diese Aufgabe wird durch die kennzeichnenden Merkmale des Anspruches 1 gelöst.

Bei dieser Konstruktion befindet sich die durch die Rechenzinken des Abstapelrechens definierte Plattenauflageebene beim Transport zwischen der Übernahme- und der Abstapelposition in der Horizontalen. Durch die Führung des Abstapelrechens durch einen diesen tragenden und durch übereinander angeordnete Schwenkhebel geführten Träger ist aufgrund einer speziellen Hebelgeometrie sichergestellt, dass erst nach dessen erfolgter horizontalen Transportbewegung bei der sich anschließenden, nach unten gerichteten Trägerbewegung zum Absenken des Abstapelrechens auf Abstreifhöhe oberhalb der Stapelvorrichtung diesem zugleich eine geringe Kippbewegung überlagert wird.

Bei der sich anschließenden Abstreifbewegung des Abstapelrechens verbleibt dieser in seiner gekippten Lage und wird erst wieder in seine Horizontalstellung zurückgesteuert, wenn er nach oben in seine Übernahmeposition bewegt wird.

In diesem Zusammenhang sei erwähnt, dass auf dem Markt bereits eine von der Firma anThon GmbH & Co., Maschinenfabrik, D-24901 Flensburg, gefertigte Abstapeleinrichtung bekannt ist, bei der ein horizontal verfahrbarer Abstapelrechen vorgesehen ist, der das Plattenmaterial in horizontaler Ebene in die Abstapelposition transportiert und zum schonenden Abstreifen erst nahe oberhalb der Abstapelebene in eine Schräglage abkippbar ist.

In diesem Falle erfolgt jedoch das Kippen des Abstapelrechens exzentergesteuert.

Bezüglich der erfindungsgemäßen Konstruktion bietet sich für den Abstapelrechen steuerungsmäßig eine einfache Lösung gemäß Anspruch 2.

In weiterer, vorteilhafter Weiterbildung der Erfindung wird vorgeschlagen, Mittel vorzusehen, die es ermöglichen, abzustapelndes Plattenmaterial in vorteilhafter Weise manuell vor dem Abstapelrechen bereitzustellen. Hierzu wird eine Konstruktion gemäss Anspruch 3 vorgeschlagen, die es zugleich ermöglicht, Stapelpakete vor der Übergabe auf den Abstapelrechen exakt auszurichten und nach der manuellen Aufgabe auf den Aufgabetisch durch den Schieber dem Abstapelrechen zuzuführen.

Um dem Abstapelrechen auch von verschiedenen Plattenaufteilsägen in unterschiedliche Formate aufgeteilte Einzelplatten oder Plattenpakete zur Abstapelung automatisch zuführen zu können, wird die Anordnung eines Rollenförderers sowie die Steuerung des Abstapelrechens nach Anspruch 4 vorgeschlagen.

Die in dieser Weise weitergebildete Konstruktion der Abstapeleinrichtung ermöglicht ein Verketten mehrerer solcher Einrichtungen, so dass diesen zugeführtes, verschieden formatiertes Plattenmaterial in jeweils einer für ein bestimmtes Plattenformat vorgesehenen Stapelvorrichtung in diesen Abstapeleinrichtungen als Charge abstapelbar ist.

In der Zeichnung ist ein mögliches Ausführungsbeispiel der Erfindung, stark schematisiert, dargestellt. Es zeigen:
- Fig. 1:: eine Seitenansicht der funktionswesentlichen Komponenten der Abstapeleinrichtung, wobei der Abstapelrechen ihrer Transportvorrichtung sowohl in seiner Ausgangsstellung zur Übernahme von Plattenmaterial als auch in seiner Abstapelstellung über der Stapelvorrichtung dargestellt ist;
- Fig. 2:: eine Darstellung ähnlich Fig. 1, wobei dem Abstapelrechen der Transportvorrichtung ein mit einem Materialschieber ausgestatteter Aufgabetisch vorgeschaltet ist;
- Fig. 3:: eine Draufsicht auf die Abstapeleinrichtung gemäss Fig. 2, in verkleinertem Maßstab, die einer Plattenaufteilsäge zugeordnet ist;
- Fig. 4:: eine Darstellung der Abstapeleinrichtung gemäss Fig. 3 in gegenüber Fig. 3 vergrössertem Maßstab, die zur automatischen Beschickung mit Plattenmaterial modifiziert ist;
- Fig. 5:: eine Draufsicht auf mehrere, miteinander verkettete Abstapeleinrichtungen gemäss Fig. 4.

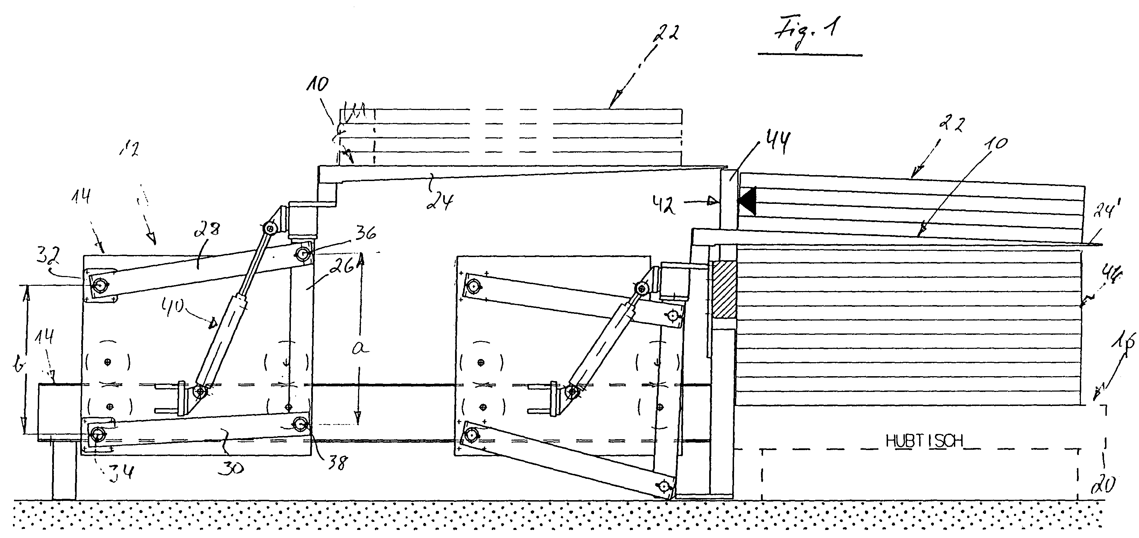

Die in Fig. 1 gezeigte Abstapeleinrichtung weist eine einen an sich bekannten Abstapelrechen 10 tragende Transportvorrichtung 12 auf, die mit einem entlang eines Führungsgestelles 14 horizontal zwischen einer Übernahmestellung und einer Abstapelstellung verfahrbaren Transportwagen 16 ausgestattet ist.

Mit 18 ist eine Stapelvorrichtung bezeichnet, auf deren Hubtisch 20 Plattenpakete 22 abstapelbar sind, die zuvor vom Abstapelrechen 10 aufgenommen worden sind und bei Überführen der Transportvorrichtung 12 in die Abstapelstellung über der Stapelvorrichtung 18 positioniert werden.

Der Abstapelrechen 10 ist in bekannter Weise mit einer Vielzahl von sich in Richtung auf die Stapelvorrichtung 18 erstreckenden, ihrem freien Ende zu sich spitzkeilförmig verjüngenden Rechenzinken 24 bestückt und auf einem aufrecht angeordneten, höhenverstellbaren Träger 26 befestigt.

Der Träger 26 wird von wenigstens einem Paar von Schwenkhebeln 28 und 30 in vertikaler Ebene geführt. Diese sind mit ihrem einen Hebelende im Abstand übereinander in einer gemeinsamen Vertikalebene bei 32 und 34 am Transportwagen 16 und mit ihrem anderen Hebelende mit entsprechend gegenseitigem Abstand bei 36 und 38 am Träger 26 angelenkt.

Der gegenseitige Abstand a der trägerseitigen Hebelanlenkpunkte 36 und 38 ist dabei grösser als der gegenseitige Abstand b der wagenseitigen Hebelanlenkpunkte 32 und 34. Dadurch ist die Länge der im wesentlichen ein Hebelparallelogramm bildenden Schwenkhebel 28 und 30 unterschiedlich, wobei durch die gewählte Lage der Hebelanlenkpunkte 32, 34, 36, 38 der obere Schwenkhebel 28 geringfügig länger als der untere Schwenkhebel 30 ist.

Die dadurch bedingte Hebelgeometrie führt dazu, dass dem Abstapelrechen 10 bei Hubbewegungen des Trägers 26 zwei Bewegungen überlagert werden, was nachstehend noch erläutert wird.

Der Träger 26 bzw. Abstapelrechen 10 ist mittels einer Betätigungsvorrichtung 40, vorzugsweise in Form eines Zylinderkolbenaggregates, anheb- und absenkbar, die einerseits am Träger 26 und andererseits am Transportwagen 16 angelenkt ist.

In der in der Fig. 1, links, gezeigten Ausgangsstellung der Transportvorrichtung 12 befindet sich der Abstapelrechen 10 in seiner oberen, horizontalen Aufnahmestellung zur Bestückung mit einem Plattenstapel 22.

In dieser Stellung befindet sich das freie Ende der Zinken 24 des Abstapelrechens 10 vorzugsweise kurz oberhalb eines der Stapelvorrichtung 18 vorgeordneten, stationären Abstreifanschlages in Form eines Abstreifrechens 42, dessen Zinken 44 sich vertikal nach oben erstrecken.

Zum Abstapeln des Plattenpakets 22 ist die Transportvorrichtung 12 in die in Fig. 1 gezeigte rechte Übergabestellung zu steuern, wobei der Abstapelrechen 10 das Plattenpaket 22 über den Abstreifrechen 42 so weit hinwegträgt, dass sich schliesslich der Abstreifrechen 42 unterhalb des linken Stirnendes des Plattenpaketes 22 befindet.

Danach ist der Abstapelrechen 10 so weit abzusenken, dass er sich lediglich noch mit einem geringen Abstand beispielsweise oberhalb eines auf dem Hubtisch 20 bereits abgestapelten Plattenteilstapels 46 befindet. Dabei tauchen die Zinken 44 des Abstreifrechens 42 nach oben aus dem Abstapelrechen 10 aus und bilden den Abstreifanschlag 42 für das abzustapelnde Plattenpaket 22.

Aufgrund der erläuterten, gegenseitigen Zuordnung der Hebelanlenkpunkte 32, 34, 36, 38 bzw. der dadurch geschaffenen Hebelgeometrie wird der nach unten gerichteten Hebelbewegung des Abstapelrechens 10 zugleich eine geringfügige Kippbewegung desselben von vorzugsweise ungefähr 3° überlagert, so dass das freie Zinkenende 24' seiner Rechenzinken 24 gewissermassen mit der oberen Platte des Plattenstapels 46 Kontakt bekommt. Danach wird die Transportvorrichtung 12 in ihre gemäss Fig. 1 linke Ausgangsstellung zurückgesteuert, dabei der sich zwischen Plattenpaket 22 und Plattenstapel 46 befindende Abstapelrechen 10 aus der Stapelvorrichtung 18 herausgezogen und anschliessend wieder in seine obere Ausgangsstellung zurückgesteuert, wobei der Abstapelrechen 10 zur erneuten Aufnahme eines Plattenpakets 22 wieder in die Horizontale zurückbewegt wird.

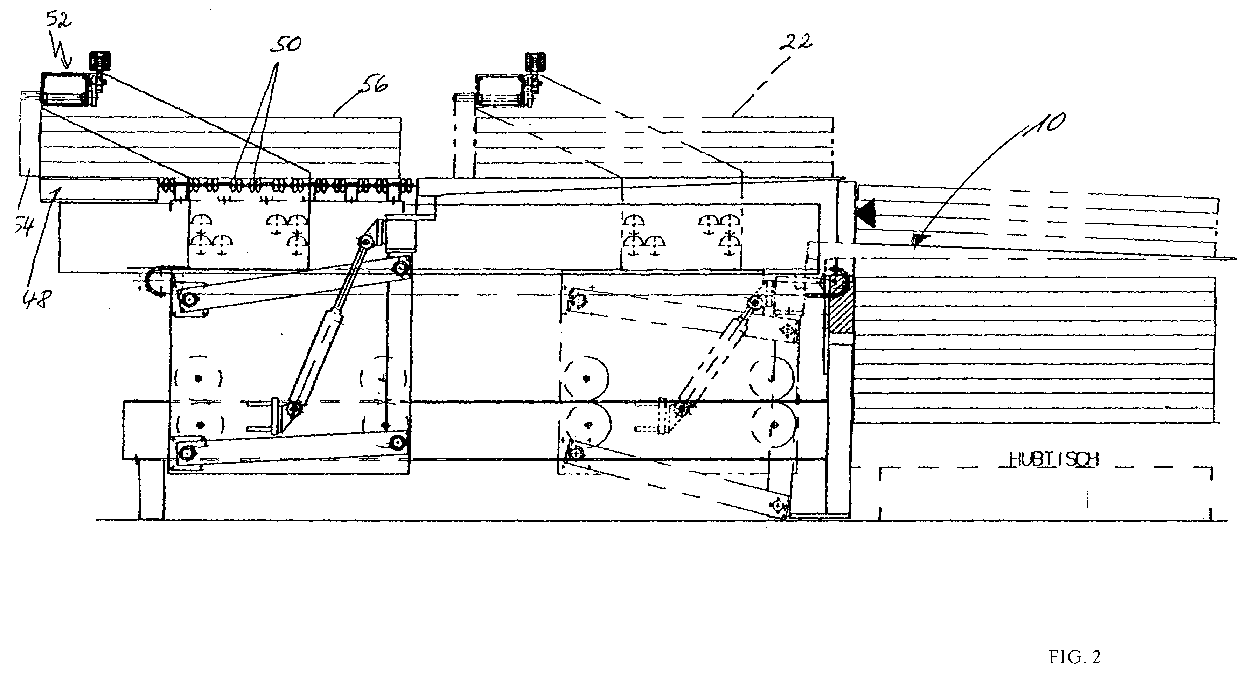

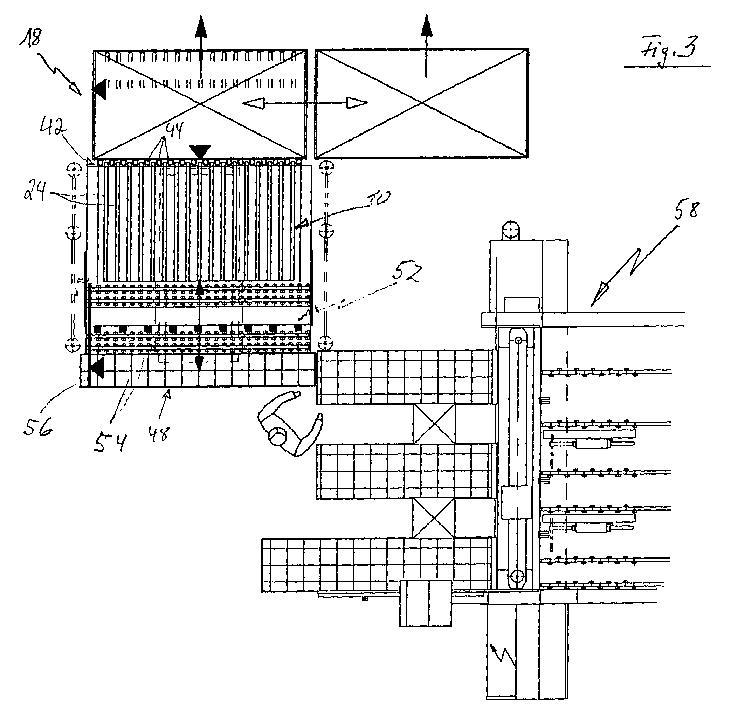

Die Fig. 2 und 3 zeigen eine modifizierte Ausführungsform der Abstapeleinrichtung, indem der Transportvorrichtung 12 ein Aufgabetisch 48, beispielsweise zur manuellen Bereitstellung von Einzelplatten oder Plattenpaketen 22, vorgeschaltet ist, der vorzugsweise als insbesondere mit Allseitenrollen 50 bestücktem Rollentisch ausgebildet ist.

Diesem Aufgabetisch 48 ist ein auf dem oberen Teil des Führungsgestells 14 in den Bewegungsrichtungen des Abstapelrechens 10 oberhalb des letzteren horizontal verfahrbarer Schieber 52 zugeordnet, der mit einer Vielzahl von Anschlägen 54 bestückt ist, die beispielsweise durch gemeinsames Verschwenken aus einer nach unten gerichteten Anschlagstellung in eine obere Freigabestellung steuerbar sind. Wie Fig. 3 zeigt, ist dem Schieber 52 ein zu diesem senkrecht stehender Seitenanschlag 56 zugeordnet. Zur manuellen Aufgabe von Plattenpaketen 22, die beispielsweise auf einer Plattenaufteilsäge 58 anfallen, ist der Schieber 52, gemäss Fig. 3, in eine Anschlagstellung zurückzufahren, so dass ein Plattenpaket 22 an dessen Anschläge 54 sowie an den Seitenanschlag 56 zur Anlage gebracht bzw. exakt ausgerichtet werden kann. Danach sind die Anschläge 54 in ihre obere Freigabestellung zu steuern, so dass der Schieber 52 über das Plattenpaket 22 hinweg in seine in Fig. 2 gezeigte Mitnahmestellung steuerbar ist, in der dessen Anschläge 54 wieder in ihre untere Anschlagstellung zurückzustellen sind.

Danach ist der Schieber 52 in Richtung auf den Abstapelrechen 10 zu steuern, um diesem das Plattenpaket 22 ausgerichtet zuzuführen. Anschliessend ist der Schieber 52 wieder in seiner in Fig. 3 gezeigten Anschlagstellung bereitzustellen, um erneut auf dem Aufgabetisch 48 Plattenmaterial ausrichten zu können.

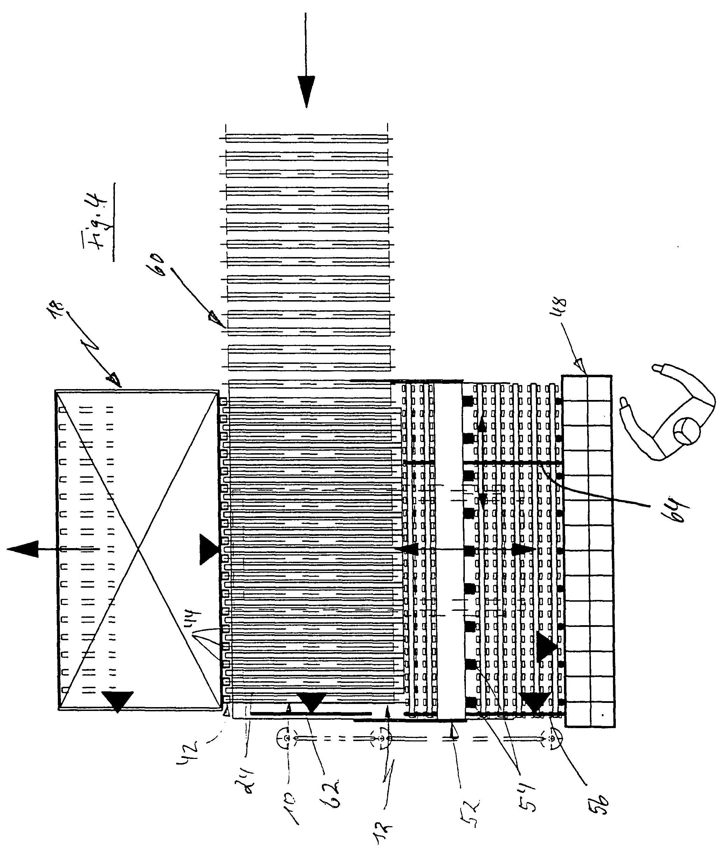

Eine weitere, modifizierte Konstruktion zeigt Fig. 4. Dort ist zwischen Transportvorrichtung 12 und Stapelvorrichtung 18 eine weitere geeignete Transportvorrichtung, beispielsweise in Form eines Rollenförderer 60, zwischengeschaltet, durch den Plattenmaterial zur Übergabe auf den Abstapelrechen 10 selbsttätig bereitgestellt werden kann.

Die Abstapeleinrichtung kann dabei auch ohne Aufgabetisch 48, also lediglich in der in Fig. 1 dargestellten Ausführungsform, vorgesehen sein.

Zur Übergabe des Plattenmaterials ist dasselbe in diesem Falle gegen einen Stirnanschlag 62 des Rollenförderers 60 zu steuern, wobei der Abstapelrechen 10 mit seinen Rechenzinken 24 zunächst unterhalb der Förderebene des Rollenförderers 10 zu positionieren ist.

Nach Bereitstellung des Plattenmaterials am Stirnanschlag 62 ist der Abstapelrechen 10 nach oben zur Übernahme des Plattenmaterials zu steuern, wobei dasselbe vom Rollenförderer 60 abgehoben und für den sich anschliessenden Transport zur Stapelvorrichtung 18 bereitgestellt wird.

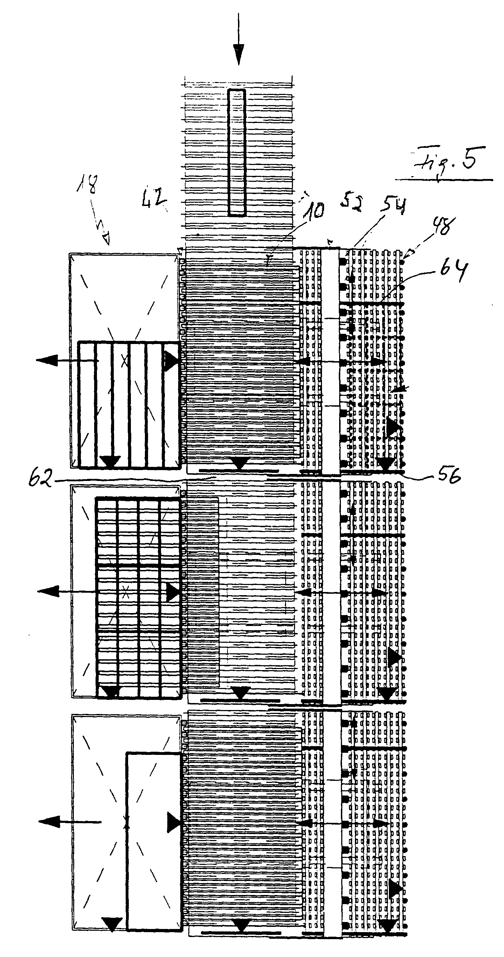

Fig. 5 veranschaulicht, wie sich Abstapeleinrichtungen gemäss Fig. 4 miteinander verketten lassen, um durch den Rollenförderer 60 nacheinander zur Anlieferung kommende Einzelformate oder Plattenpakete in unterschiedlichen Abmessungen jeweils einer für eines dieser Plattenmaße bestimmten Stapelvorrichtung 18 der Abstapeleinrichtungen zuzuführen.

Sind dabei die Abstapeleinrichtungen, wie gezeigt, mit jeweils einem mit einem Anschlagschieber 52 kombinierten Aufgabetisch 48 ausgestattet, bietet sich die Möglichkeit, entweder Plattenmaterial, das in einer Stapelvorrichtung 18 nicht mehr abstapelbar ist, zunächst zu parken oder dort Plattenmaterial zunächst chargenweise zusammenzustellen, um danach jeweils Charge für Charge über den Anschlagschieber 52 und den Abstapelrechen 10 der betreffenden Stapelvorrichtung 18 zuzuführen.

Für das chargenweise Zusammenstellen von Plattenmaterial auf den Aufgabetischen 48 ist deren Seitenanschlag 56 noch ein zusätzlicher, in Längsrichtung des Anschlagschiebers 52 verstellbarer und feststellbarer Seitenanschlag 64 zuzuordnen (s. Fig. 4 und 5).

Sämtliche Funktionen der Abstapeleinrichtung bzw. aller Komponenten der miteinander verketteten Abstapeleinrichtungen erfolgen programmgesteuert. Im Falle miteinander verketteter Abstapeleinrichtungen erfolgt somit das Parken von Plattenmaterial auf den Aufgabetischen 48 und das chargenweise Zusammenstellen von gleichartigen Formaten sowie deren Anlieferung durch den Rollenförderer 60 in den einzelnen Abstapeleinrichtungen, was durch entsprechende Ansteuerung der Stirnanschläge 62 bewerkstelligt wird, vollautomatisch.

Die Steuerung des Abstreifrechens 10 über Schwenkhebel 28, 30 bietet sich auch dann als vorteilhafte Lösung an, falls der Abstreifrechen 10 in seiner abgesenkten Abstapelposition nicht zugleich leicht abgekippt sein soll. In diesem Falle wären die Schwenkhebel 28, 30 exakt parallel zu führen. Der Abstand ihrer Anlenkpunkte 32, 34 bzw. 36, 38 müsste demgemäss wagen- und trägerseitig gleich sein.

## Patentansprüche

1. Einrichtung zum Abstapeln von aus Einzelplatten oder Plattenpaketen bestehendem Plattenmaterial, mit einem Transportwagen (16), der einen mittels einer Steuervorrichtung (26, 28, 30, 40) höhenverstellbaren Abstapelrechen (10) zur Aufnahme von abzustapelndem Plattenmaterial (22) trägt und einer mit einem stationären, nach oben gerichtete Zinken ausgestatteten Abstreifanschlag (44) aufweisenden Stapelvorrichtung (18) für abzustapelndes Plattenmaterial (22), das mittels des Abstapelrechens (10) durch horizontales Verfahren des Transportwagens (16) aus einer Übernahmeposition in eine sich oberhalb der Stapelvorrichtung (18) befindende Abstapelposition transportierbar und dort relativ zum Abstreifanschlag (44) bis nahe an die Abstapelebene absenkbar ist, wobei die Zinken von Abstapelrechen (10) und Abstreifanschlag (44) gegenseitig in Eingriff kommen und zum Abstreifen des Plattenmaterials (22) vom Abstapelrechen (10) der Transportwagen (16) in seine Ausgangslage zurückgesteuert wird, **dadurch gekennzeichnet, dass** die Steuervorrichtung wenigstens ein Paar von im Abstand übereinander angeordneten Schwenkhebeln (28, 30) aufweist, die mit einem Hebelende in einer gemeinsamen Vertikalebene an dem, den Abstapelrechen (10) führenden Transportwagen (16) und mit ihrem anderen Hebelende an einem den Abstapelrechen (10) tragenden Träger (26) angelenkt sind, wobei der Abstand ihrer wagenseitigen Schwenkachsen (32, 34) kleiner ist als derjenige ihrer trägerseitigen Schwenkachsen (36, 38) und dass der Träger (26) mittels einer Betätigungsvorrichtung (40) anheb- und absenkbar ist.

2. Einrichtung nach Anspruch 1, **dadurch gekennzeichnet, dass** die Betätigungsvorrichtung (40) ein Zylinderkolbenaggregat ist, das einerseits am Träger (26) und andererseits am Transportwagen (16) des Abstapelrechens (10) angelenkt ist.

3. Einrichtung nach den Ansprüchen 1 oder 2, **dadurch gekennzeichnet, dass** zur Bereitstellung von Plattenmaterial (22) in der Übernahmeposition ein Aufgabetisch (48) angeordnet ist, der einen oberhalb des Abstapelrechens (10) verfahrbaren Schieber (52) mit aktivierbaren Anschlägen (54) zum Ausrichten und Aufschieben des Plattenmaterials auf den Abstapelrechen (10) aufweist.

4. Einrichtung nach einem der vorhergehenden Ansprüche, **dadurch gekennzeichnet, dass** zwischen Transportvorrichtung (12) und Stapelvorrichtung (18) ein horizontaler Rollenförderer (60) vorgesehen ist, der sich zur Anlieferung von Plattenmaterial (22) auf den Abstapelrechen (10) quer zur Transportrichtung des Transportwagens (16) erstreckt und dass der Abstapelrechen (10) zur Übernahme des Plattenmaterials (22) aus einer Stellung unterhalb der Förderebene des Rollenförderers (60) in eine über diesem liegende Übernahmestellung und anschließend über die Stapelvorrichtung (18) steuerbar ist.

5. Einrichtung nach einem der vorhergehenden Ansprüche, **dadurch gekennzeichnet, dass** das Plattenmaterial (22) auf einen Hubtisch (20) der Stapelvorrichtung (18) abstapelbar ist.

## Claims

1. A device for stacking panel material consisting of individual panels or panel packets, having a conveying truck (16), which supports a stacking fork (10), which is height-adjustable by means of a control mechanism (26, 28, 30, 40), for receiving panel material (22) to be stacked, and having a stacking device (18), which has a stripper detent (44) equipped with stationary, upwardly oriented teeth, for the panel material (22) to be stacked, which can be conveyed by the stacking fork (10) by means of the horizontal displacement of the conveying truck (16) out of a transfer position into a stacking position located above the stacking device (18) and can there be lowered in relation to the stripper detent (44) close to the stacking level, wherein the teeth of the stacking fork (10) and the stripper detent (44) come into mutual engagement and wherein the conveying truck (16) is steered back into its initial position for stripping off the panel material (22) from the stacking fork (10), **characterized in that** the control device has a pair of pivot levers (28, 30) arranged one above the other, one lever end of which is linked in a common vertical plane to the conveying truck (16) supporting the stacking fork (10), and with their other lever end is linked to a support (26) bearing the stacking fork (10), wherein the distance between their pivot shafts (32, 34) at the truck side is less than that of their pivot shafts (36, 38) at the support side, and that the support (26) can be raised and lowered by means of an actuating device (40).

2. The device in accordance with claim 1, **characterized in that** the actuating device (40) is a cylinder piston unit, one side of which is linked to the support (26) and the other to the conveying truck (16) for the stacking fork (10).

3. The device in accordance with claim 1 or 2, **characterized in that** a feeder table (48), which has a slide (52), which can be displaced above the stacking fork (10) and has actuable detents (54) for aligning and pushing the panel material on the stacking fork (10), is arranged for placing the panel material (22) into the transfer position.

4. The device in accordance with one of the preceding claims, **characterized in that** a horizontal roller conveyor (60) is provided between the conveying device (12) and the stacking device (18) which, for delivering panel material (22) to the stacking fork (10), extends transversely to the conveying direction of the conveying truck (16), and that for accepting the panel material (22), the stacking fork (10) can be steered out of a position below the conveying plane of the roller conveyor (60) into a transfer position located above it, and subsequently above the stacking device (18).

5. The device in accordance with one of the preceding claims, **characterized in that** the panel material (22) can be stacked on a lifting table (20) of the stacking device (18).

## Revendications

1. Installation de déchargement d'éléments de plaques constitués de plaques individuelles ou de groupes de plaques, munie d'un chariot transporteur (16) supportant une grille de déchargement (10) réglable en hauteur à l'aide d'un dispositif de commande (26, 28, 30, 40) et destinée à recevoir les éléments de plaques à décharger, et munie par ailleurs d'un dispositif de chargement (18), comportant une butée d'enlèvement (44) munie d'une dent fixe dirigée vers le haut, destiné à l'élément de plaque (22) à décharger, celui-ci pouvant ainsi être transféré, à l'aide de la grille de déchargement (10), par le déplacement horizontal du chariot transporteur (16), d'une position de réception à une position de déchargement se trouvant au-dessus du dispositif de chargement (18), et pouvant à cet endroit être abaissé par rapport à la butée d'enlèvement (44), jusqu'à arriver près du plan de déchargement, les dents de la grille de déchargement (10) et la butée d'enlèvement (44) s'engrenant alors mutuellement et le chariot transporteur (16) étant ramené dans sa position initiale afin d'enlever l'élément de plaque (22) de la grille de déchargement (10), **caractérisée en ce que** le dispositif de commande comporte au moins deux leviers pivotants (28, 30) espacés l'un par rapport à l'autre, qui sont articulés par l'une de leurs extrémités, dans un plan vertical commun, sur le chariot transporteur (16) guidant la grille de déchargement (10) et par leur autre extrémité sur un support (26) soutenant la grille de déchargement (10), l'écart de leurs axes de pivotement (32, 34) situés du côté du chariot étant inférieur à celui de leurs axes de pivotement (36, 38) situés du côté du support, et **en ce que** le support (26) peut être levé ou abaissé au moyen d'un dispositif d'actionnement (40).

2. Installation selon la revendication 1, **caractérisée en ce que** le dispositif d'actionnement (40) est un groupe de pistons cylindriques, articulé d'un côté sur le support (26) et de l'autre côté sur le chariot transporteur (16) de la grille de déchargement (10).

3. Installation selon les revendications 1 ou 2, **caractérisée en ce qu'**une table de chargement (48) est prévue pour disposer l'élément de plaque (22) dans la position de réception, cette table comprenant un coulisseau (52), amovible au-dessus de la grille de déchargement (10) et muni de taquets (54) pouvant être actionnés, afin d'orienter et de pousser l'élément de plaque sur la grille de déchargement (10).

4. Installation selon l'une des revendications précédentes, **caractérisée en ce qu'**un transporteur à rouleaux horizontal (60) est prévu entre le dispositif de transport (12) et le dispositif de chargement (18), et avance afin de pouvoir livrer l'élément de plaque (22) sur la grille de déchargement (10), de façon oblique par rapport au sens de déplacement du chariot transporteur (16), et **en ce qu'**il est possible de manoeuvrer la grille de déchargement (10) afin qu'elle reçoive l'élément de plaque (22), en la faisant pour cela passer d'une position située sous le plan d'acheminement du transporteur à rouleaux (60) à une position de réception située au-dessus de celui-ci, puis au-dessus du dispositif de chargement (18).

5. Installation selon l'une des revendications précédentes, **caractérisée en ce que** l'élément de plaque (22) peut être déchargé sur une table élévatrice (20) du dispositif de chargement (18).
